# EUROPEAN PATENT APPLICATION

(11) **EP 2 705 807 A1**
(43) Date of publication of application: **12.03.2014**
(21) Application number: 13160156.9
(22) Date of filing: 20.03.2013
(51) Int. Cl.: A61C 7/28

(54) **Arrangement introduced in bracket with curvilinear ridges**

(30) Priority: 06.09.2012 BR 202012022520 U
(71) Applicant: Dental Morelli Ltda., 18083-090 Sorocaba (BR)
(72) Inventor: de Vechi Morelli, Oraci João, 18017-387 Sorocaba (BR)
(74) Representative: Müller Schupfner & Partner

(57) **Abstract**

"ARRANGEMENT INTRODUCED IN BRACKET WITH CURVILINEAR RIDGES", is constituted by one bracket for fixed braces that belongs to the orthodontics and, unlike the brackets that exist in the market, it has an unique geometry with specific functionalities, such as a clip that detaches close to the basis, rounded edges among other parameters; the bracket with curvilinear ridges (1) is composed of two pieces, the clip (2) or lock, which encapsulates the traction wire, and the main structure, which is monoblock and has all corners rounded; the main structure shows off a squared basis (3) topped by an upper-basis (4) that covers all the width and only a central third of the depth, being its height proportional to the width and depth; above the upper-basis (4) an "U" structure (5) is developed with a quadratic profile that has four hooks (6) in its upper vertexes, with concave upper portion and convex bottom portion (7), being one of these hooks (6) equipped, at the head and in material continuity, by a spherical hook (8) preceded by a connection segment (9) with a rectangular flat profile, etc..

## Description

### Field of application

This utility model patent belongs to the field of orthodontics and deals with a component for fixed braces called self-binder bracket that innovates because of its geometry and curvilinear ridge, which is posted in the tooth for the tractor wire placement and then correct the dental deviations.

The bracket has a clip for the turnbuckle wire's latching that innovates for being downright removed or engaged, whose engagement on the bracket's structure has a specific and innovative project and the clip's engagement manner facilitates and prevents the bracket to detach when handled by the orthodontic professional. In addition to these innovations, the set is discreet, very anatomical and causes the user some discomfort.

All its edges are rounded and prevent the oral cavity mucosa aggression and, as well as the crimping elastic hook and other turnbuckles that have the same spherical geometry, which besides being safe, bring the user more comfort.

The aim of this patent application is to present an orthodontic bracket, with low-cost for its industrial workability, allied in the robustness requirements, reliability and usefulness convenience that it offers to the orthodontic section, an additional option in the congeners market that, as opposed to the conventional brackets, is endowed with umpteen possibilities and benefits, becoming a model with a large expectation and acceptance in the sectorial market.

### History of the arrangement

The brackets are supports for orthodontic wires with pre-established angulation and torque, directing the teeth according to the standard prescriptions by the several orthodontic techniques: Roth, Edgewise, Ricketts, M.B.T., Capelozza and Benvenga.

These brackets are made of stainless steel (CrNi), ceramic and composite with treated basis for offering the best resistance during the bonding on the enamel.

Several models are known in the prior art and they vary specially in its geometry, such as the brackets exalted by the WO 20120129120; US 6,257,883; US 7,255,557; US 7,717,706; MU 8902352-8; EP 1 090 604; EP 1 236 442; EP 1 428 483 patents.

The patent WO 20120129120 claims the following:
1. Self-binder brackets set for orthodontics, that comprehends: a basis; a disposed block on the basis; an occlusal wall extending from the block and having at least one occlusal connection wing; a gingival wall extending from the block and having at least a gingival connection wing; a slot, which separates the occlusal wall from the gingival one, with a minimum free width for the brackets of the set, which extends continuously in the mesial and distal direction and has a basis in which the wire arc lies during the orthodontic treatment; a passage extending in the gingival to the occlusal direction through the block and is delimited by a lingually and a labially located surface. Flexible locks with a labial and a lingual leg, which are interconnected by a, occlusally disposed portion, in which the lingual leg can be introduced inside the passage and can be moved only in the gingival to occlusal direction between a closed position, in which the labial leg extends into a groove in the gingival wall, and this recess providing at least one stop in the lingual direction to the labial leg with a distance from the slot basis, being identical for both brackets, and an opened position of the lock, in which the labial leg end is situated above the occlusal wall, and where the brackets differ in the distance of its lingual stop of the slot basis.
2. The self-binder brackets set for orthodontics, the brackets having: a basis; a disposed block on the basis; an occlusal wall extending from the block and having at least one occlusual connection wing; a gingival wall extending from the block and having at least one gingival connection wing; a slot, which separates the occlusal wall from the gingival one, with a minimum free width for the brackets of the set, which extends continuously in the mesial and distal direction and has a basis in which the wire arc lies during the orthodontic treatment; a passage extending in the gingival to the occlusal direction through the block and is delimited by a lingually and a labially located surface. Flexible locks with a labial and a lingual leg, which are interconnected by a, occlusally disposed portion, in which the lingual leg can be introduced inside the passage and can be moved only in the gingival to occlusal direction between a closed position, in which the labial leg extends into a groove in the occlusal wall, and this groove providing at least one stop in the lingual direction to the labial leg with a distance from the slot basis, being identical for both brackets, and an opened position of the lock, in which the labial leg end is situated above the gingival wall, and where the brackets differ in the distance of its labial stop of the slot basis.
3. The set in accordance with the claim 1, in which the brackets have identical locks.
4. The set in accordance with the claim 1, in which the minimum free width of the slot is 0.56 mm (0.022 inches) in the first variant and 0.46 mm (0,018 inches) in the second one.
5. The set in accordance with the claim 1, in which: for the first bracket, the distance from the slot to the lock's labial leg of the slot's basis is chosen in a big way that the orthodontic arc, having the biggest cross section occurring in the orthodontic practice, is not subject to the pressure by the lock in its closed position when the wire arc lies on the slot's basis and, for a second bracket, the distance from the stop to the labial leg of the slot's basis lock is chosen to be smaller.
6. The set in accordance with the claim 1 still comprehending orthodontic arcs.
7. The set in accordance with the claim 6, in which orthodontic arcs restrained have a cross section of at most 0,56 mm X 0,64 mm (0,022 inches X 0,025 inches).
8. The set in accordance with the claim 1, in which the distance from the stop to the labial leg of the slot's basis lock is 0,64 mm (0,025 inches), for a first bracket, and 0,3mm to 0,5 mm, in particular 0,38mm to 0,42mm, for a second bracket.
9. The set in accordance with the claim 1, in which the brackets have a stop for the lock's labial leg (25), being this stop effective in the labial direction opposite from the lingual stop for the lock's labial leg.
10. The set in accordance with the claim 1, in which a groove in the gingival wall or in the occlusal wall of the bracket is or includes a window or a groove, which has edges in parallel to the slot's basis.
11. The set in accordance with the claim 1, in which the set has brackets that only differ in the depth of the slot.
12. The set in accordance with the claim 1, still comprehending pairs of brackets with identical locks, in which both brackets with a pair only differ in the depth of the slot.
13. The self-binder brackets set for orthodontics, the brackets having: a basis; a disposed block on the basis; an occlusal wall extending from the block and having at least one occlusual connection wing; a gingival wall extending to the block and having at least one gingival connection wing; a slot, which separates the occlusal wall from the gingival one, with a minimum free width for the brackets of the set, which extends continuously in the mesial and distal direction and has a basis in which the wire arc lies during the orthodontic treatment; and with a passage that extends in the gingival to the occlusal direction through the block and is delimited by a lingually and a labially located surface, as well as flexible locks with a labial and a lingual leg, which are interconnected by an occlusally disposed portion, in which the lingual leg can be introduced inside the passage and can be moved only in the gingival to occlusal direction between a closed position, in which the labial leg extends into a slot in the occlusal wall, this slot providing at least one stop in the lingual direction to the labial leg with a distance from the slot basis, being identical for both brackets, and an opened position of the lock, in which the labial leg end is situated above the gingival wall, and where the brackets differ in the distance of its labial stop of the slot basis in which, for a first bracket, the distance of a stop for the labial leg of the slot's basis lock is chosen a big way that the orthodontic arc, having the biggest cross section occurring in the orthodontic practice is not subject to the pressure by the lock in its closed position when the wire arc lies on the slot's basis and which, for a second bracket, the distance from the stop to the labial leg of the slot's basis lock is chosen to be smaller.
14. The self-binder brackets set for orthodontics, the brackets having: a basis; a disposed block on the basis; an occlusal wall extending from the block and having at least one occlusual connection wing; a gingival wall extending to the block and having at least one gingival connection wing; a slot, which separates the occlusal wall from the gingival one, with a minimum free width for the brackets of the set, which extends continuously in the mesial and distal direction and has a basis in which the wire arc lies during the orthodontic treatment; and with a passage that extends in the gingival to the occlusal direction through the block and is delimited by a lingually and a labially located surface, as well as flexible locks with a labial and a lingual leg, which are interconnected by an occlusally disposed portion, in which the lingual leg can be introduced inside the passage and can be moved only in the gingival to occlusal direction between a closed position, in which the labial leg extends into a groove in the occlusal wall, this groove providing at least one stop in the lingual direction to the labial leg with a distance from the slot's basis, being identical for both brackets, and an opened position of the lock, in which the labial leg end is situated above the gingival wall, and where the brackets differ in the distance of its labial stop of the slot basis in which the set contains brackets that only differ in the depth of the slot.
15. The self-binder brackets set for orthodontics, the brackets having: a basis; a disposed block on the basis; an occlusal wall extending from the block and having at least one occlusual connection wing; a gingival wall extending to the block and having at least one gingival connection wing; a slot, which separates the occlusal wall from the gingival one, with a minimum free width for the brackets of the set, which extends continuously in the mesial and distal direction and has a basis in which the wire arc lies during the orthodontic treatment; and with a passage that extends in the gingival to the occlusal direction through the block and is delimited by a lingually and a labially located surface, as well as flexible locks with a labial and a lingual leg, which are interconnected by an occlusally disposed portion, in which the lingual leg can be introduced inside the passage and can be moved only in the gingival to occlusal direction between a closed position, in which the labial leg extends into a groove in the occlusal wall, this groove providing at least one stop in the lingual direction to the labial leg with a distance from the slot's basis, being identical for both brackets, and an opened position of the lock, in which the labial leg end is situated above the gingival wall, where the brackets differ in the distance of its labial stop of the slot basis, the set having brackets that only differ in the depth of the slot.

The patent US 7.255.557, claims the following:
1. Self-binder bracket for use in the orthodontics comprehending a basis; a support disposed in the basis; an occlusal wall with at least one occlusal connection wing extending from the support; a gingival wall with at least one connection wing extending from the support; a first slot separating the occlusal wall from the gingival wall and extending continuously in the mesial to distal direction; a second slot that extends continuously through the support in the gingival to occlusal direction, and which is limited by one lingual and one labial surface; and one flexible lock having one labial and one lingual leg that are interconnected by an occlusal section; the lingual leg being received in the second groove in the gingival to the occlusal direction between one closed position, in which the labial leg extends in a span in the gingival wall, and one opened position of the lock, in which the labial leg end supports in the occlusal wall in which a tongue, towards the occlusal wall, is cut outside the lingual leg of the lock and is bent towards the labial so that an acute angle is formed between the tongue and the lingual leg of the lock, in which the labial surface, which delimits the second slot, is removed or interrupted in the gingival wall's area.
2. The bracket as defined in the claim 1, in which the angle between the lingual leg of the lock and the tongue is between 15 and 25 degrees.
3. The bracket as defined in the claim 1, in which is formed as a single piece.
4. The bracket as defined in the claim 1, in which the labial leg of the lock has an oblique and/or a rounded surface in its distal and mesial edges.
5. The bracket as defined in the claim 1, in which the first slot has oblique and/or rounded surfaces in its distal and mesial ends.
6. The bracket as defined in the claim 1, in which there are two ribs in the first slot in the gingival wall in the occlusal wall, which extend in the occlusal to gingival direction.
7. The bracket as defined in the claim 6, in which the ribs have beveled or rounded ridge.
8. The bracket as defined in the claim 1, in which the lock has a rounded edge.
9. The bracket as defined in the claim 8, in which the whole edge of the lock is rounded.
10. The self-binder bracket for orthodontics comprehending a basis; a support disposed on the basis; an occlusal wall with at least one occlusal connection wing extending from the support; a gingival wall with at least one connection wing extending from the support; a first slot separating the occlusal wall from the gingival wall and extending continuously in the mesial to distal direction; a second slot that extends continuously through the support in the gingival to occlusal direction and that is limited by one lingual and one labial surface; and one flexible lock having one labial and one lingual leg that are interconnected by an occlusal section; the lingual leg being received in the second slot in the gingival to the occlusal direction between one closed position, in which the labial leg extends in a span in the gingival wall, and one opened position of the lock, in which the labial leg end supports in the occlusal wall in which a tongue, towards the occlusal wall, is cut outside the lingual leg of the lock and is bent towards the labial so that an acute angle is formed between the tongue and the lingual leg of the lock, in which the labial surface that delimits the second slot is removed or interrupted in the area of the first slot.
11. The bracket as defined in the claim 10, where the angle between the lingual leg of the lock and the tongue is between 15 and 25 degrees.
12. The bracket as defined in the claim 10 and that is formed by a single piece.
13. The bracket as defined in the claim 10, in which the labial leg of the lock has an oblique and/or rounded surface in its distal and mesial edges.
14. The bracket as defined in the claim 10, where the first slot has an oblique and/or rounded surface in its distal and mesial ends.
15. The bracket as defined in the claim 10, where two grooves are in the first slot in the gingival and occlusal wall each, which extends in the occlusal to gingival direction.
16. The bracket as defined in the claim 15 in which the grooves have beveled or rounded ridges.
17. The bracket as defined in the claim 10, in which the lock has a rounded edge.
18. The bracket as defined in the claim 17, in which the whole edge of the lock is rounded.
19. The self-binder bracket for orthodontics comprehending a basis; a support disposed on the basis; an occlusal wall with at least one occlusal connection wing extending from the support; a gingival wall with at least one connection wing extending from the support; a first slot separating the occlusal wall from the gingival wall and extending continuously in the mesial to distal direction; a second slot that extends continuously through the support in the gingival to occlusal direction and that is limited by one lingual and one labial surface; and one flexible lock having one labial and one lingual leg that are interconnected by an occlusal section; the lingual leg being received in the second slot in the gingival to the occlusal direction between one closed position, in which the labial leg extends in a span in the gingival wall, and one opened position of the lock, in which the labial leg end supports in the occlusal wall in which a tongue, towards the occlusal wall, is cut outside the lingual leg of the lock and is bent towards the labial so that an acute angle is formed between the tongue and the lingual leg of the lock, in which the lingual surface that delimits the second slot is projected beyond the end of the lingual leg of the lock at any of the lock's position, and in which a positioning help for the tool is disposed in the gingival end of the lock's lingual leg and/or before the gingival end of the lock's lingual leg, by means which the lock can be moved from the closed position to the opened position by the pressure on the gingival end of its lingual leg.
20. The bracket as defined in the claim 19, in which the positioning help if formed by a groove in the basis extending from the gingival to the occlusal, in which the groove end in a point where takes a position below the lingual leg of the lock with a spacing from the lingual leg's end when the lock is in its closed position.
21. The bracket as defined in the claim 20, in which the point stays approximately in the area where the lingual leg's end of the lock lies in the opened position of the lock.
22. The bracket as defined in the claim 20, in which the point still stays below the lingual leg of the lock in the position of the lock in which the tongue hits against the occlusal wall.
23. The bracket as defined in the claim 20, in which the tongue hits against the occlusal wall in the opened position of the lock.
24. The bracket as defined in the claim 19, in which the slot stays as a positioning help in the gingival end of the lock's lingual leg.
25. The bracket as defined in the claim 19, where the groove, which extends in the gingival to occlusal direction, stays as a positioning help in the projection section of the lingual surface that delimits the second slot.
26. The bracket as defined in the claim 25, in which the groove extends below the lingual leg of the lock in its closed position.
27. The bracket as defined in the claim 25, in which the groove stays closer from its gingival end to its occlusal end.
28. The bracket as defined in the claim 25, in which the groove extends in the basis at least in part.
29. The bracket as defined in the claim 19, in which the angle between the lingual leg of the lock and the tongue is between 15 and 25 degrees.
30. The bracket as defined in the claim 19, in which is formed as a single piece.
31. The bracket as defined in the claim 19, in which the labial leg of the lock has an oblique and/or rounded surface in its distal and mesial edge.
32. The bracket as defined in the claim 19, where the first slot has oblique and/or rounded surfaces in its distal and mesial end.
33. The bracket as defined in the claim 19, in which two grooves, in the first slot in the gingival and occlusal walls, extends in the occlusal to gingival direction.
34. The bracket as defined in the claim 33, in which the grooves have beveled or rounded edges.
35. The bracket as defined in the claim 19, where the lock has a rounded edge.
36. The bracket as defined in the claim 35, where the whole edge of the lock is rounded

The patent US 7.717.706, claims the following:
1. Self-binder brackets for orthodontics having the following features: The bracket comprehends a basis; a support disposed on the basis; an occlusal wall with at least one occlusal connection wing extending from the support; a gingival wall with at least one connection wing extending from the support; a slot separating the occlusal wall from the gingival wall and extending continuously in the mesial to distal direction; a passage that extends continuously through the support in the gingival to occlusal direction; and one flexible lock having one labial and one lingual leg that are interconnected by a section in the occlusal or in the gingival side; the lingual leg is received in the passage and is disposed to the displacement in the passage only in the gingival to occlusal direction, between one closed and one opened position of the lock; in the closed position, the labial leg extends into a cut in the gingival wall or in the occlusal wall, respectively, which has a stop for the labial leg, at least in the labial direction; in the opened position, the labial leg end is placed above the occlusal wall or above the gingival wall, respectively; the labial leg of the lock has one wing that extends in the distal direction and one wing that extends in the mesial direction; in the closed position of the lock, the wings are placed above the slot or in the labial region of the slot, while one lingual extension of the lock's labial leg is placed in the cut, the extension being closer than the width of the labial leg, measured through the wings; the extension of the lock's labial leg is in contact with, or is almost in contact with, the labial stop, in the closed position of the lock; even when the slot is empty, the labial edge of the cut has two straight sections that extend according to an angle greater than 180 degrees, in relation to each other.
2. The bracket, as defined in claim 1, in which the wings don't extend into the cut.
3. The bracket, as defined in claim 1, in which the wings' edge is rounded.
4. The bracket, as defined in claim 1, in which the wings' width decreases to their ends.
5. The bracket, as defined in claim 1, in which the wings are curve in the labial direction.
6. The bracket, as defined in claim 1, in which the wings opposes a smaller resistance to the bending in the labial direction than the main portion of the lock, from which the wings project themselves.
7. The bracket, as defined in claim 6, in which the wings are thinner or smoother than the main portion of the lock.
8. The bracket, as defined in claim 6, in which the material of the lock is weakened between the wings and the main portion of the lock.
9. The support, as defined in claim 1, in which the width of the labial leg's extension of the lock and the dimensions of the cut in the gingival wall or in the occlusal wall, respectively, are adapted to each other so that the labial leg will not be deformed plastically by an arc, due to the torsional tension in the course of an orthodontic treatment.
10. Self-binder brackets for orthodontics having the following features: The bracket comprehends a basis; a support disposed on the basis; an occlusal wall with at least one occlusal connection wing extending from the support; a gingival wall with at least one connection wing extending from the support; a slot separating the occlusal wall from the gingival wall and extending continuously in the mesial to distal direction; a passage that extends continuously through the support in the gingival to occlusal direction; and one flexible lock having one labial and one lingual leg that are interconnected by a section in the occlusal or in the gingival side; the lingual leg is received in the passage and is disposed to the displacement in the passage only in the gingival to occlusal direction, between one closed and one opened position of the lock; in the closed position, the labial leg extends into a cut in the gingival wall or in the occlusal wall, respectively, which has a stop for the labial leg, at least in the labial direction; in the opened position, the labial leg end is placed above the occlusal wall or above the gingival wall, respectively; the labial leg of the lock has one wing that extends in the distal direction and one wing that extends in the mesial direction; in the closed position of the lock, the wings are placed above the slot or in the labial region of the slot, while one lingual extension of the lock's labial leg is placed in the cut, the extension being closer than the width of the labial leg, measured through the wings; the extension of the lock's labial leg is in contact with, or is almost in contact with, the labial stop, in the closed position of the lock; even when the slot is empty, the labial edge of the cut has two straight sections that extend according to an angle greater than 180 degrees, in relation to each other.
11. The bracket, as defined in claim 10, in which the labial leg's extension of the lock is in contact with the labial stop, in the closed position of the lock, even when the slot is empty.
12. Self-binder brackets for orthodontics having the following features: The bracket comprehends a basis; a support disposed on the basis; an occlusal wall with at least one occlusal connection wing extending from the support; a gingival wall with at least one connection wing extending from the support; a slot separating the occlusal wall from the gingival wall and extending continuously in the mesial to distal direction; a passage that extends continuously through the support in the gingival to occlusal direction; and one flexible lock having one labial and one lingual leg that are interconnected by a section in the occlusal or in the gingival side; the lingual leg is received in the passage and is disposed to the displacement in the passage only in the gingival to occlusal direction, between one closed and one opened position of the lock; in the closed position, the labial leg extends into a cut in the gingival wall or in the occlusal wall, respectively, which has a stop for the labial leg, at least in the labial direction; in the opened position, the labial leg end is placed above the occlusal wall or above the gingival wall, respectively; the labial leg of the lock has one wing that extends in the distal direction and one wing that extends in the mesial direction; in the closed position of the lock, the wings are placed above the slot or in the labial region of the slot, while one lingual extension of the lock's labial leg is placed in the cut, the extension being closer than the width of the labial leg, measured through the wings; the extension of the lock's labial leg is in contact with, or is almost in contact with, the labial stop, in the closed position of the lock; even when the slot is empty, the labial edge of the cut has two straight sections that extend according to an angle greater than 180 degrees, in relation to each other.
13. The bracket as defined in claim 12, in which the labial edge of the cut projects itself in the mirror lingual direction - symmetrically compared with its central plan that cross the slot
14. The bracket as defined in claim 12, in which the central portion of the slot's labial edge projects itself as far as possible in the lingual direction.
15. The bracket as defined in claim 12, in which the labial edge of the cut has a convex shape.
16. The bracket, as defined in claim 12, in which two straight sections of the cut's labial edge extend from a point with common angle.
17. The bracket as defined in claim 12, in which two straight sections of the cut's labial edge extend according to an angle greater than 180 degrees compared with others that are connected by a third straight section.
18. The bracket as defined in claim 17, in which the third straight section of the cut's labial edge extends parallel to the bottom of the slot.
19. A method for using an orthodontic support having a basis; a support disposed on the basis; an occlusal wall with at least one occlusal connection wing extending from the support; a gingival wall with at least one connection wing extending from the support; a slot separating the occlusal wall from the gingival wall and extending continuously in the mesial to distal direction; a passage that extends continuously through the support in the gingival to occlusal direction; and one flexible lock having one labial and one lingual leg that are interconnected by a section in the occlusal or in the gingival side; the lingual leg is received in the passage and is disposed to the displacement in the passage only in the gingival to occlusal direction, between one closed and one opened position of the lock; in the closed position, the labial leg extends into a cut in the gingival wall or in the occlusal wall, respectively, which has a stop for the labial leg, at least in the labial direction; in the opened position, the labial leg end is placed above the occlusal wall or above the gingival wall, respectively; the labial leg of the lock has one wing that extends in the distal direction and one wing that extends in the mesial direction; in the closed position of the lock, the wings are placed above the slot or in the labial region of the slot, while one lingual extension of the lock's labial leg is placed in the cut, the extension being closer than the width of the labial leg, measured through the wings; the extension of the lock's labial leg is in contact with, or is almost in contact with, the labial stop, in the closed position of the lock; even when the slot is empty, the labial edge of the cut has two straight sections that extend according to an angle greater than 180 degrees, in relation to the other comprehending the steps to correct the teeth position, which are misaligned, an arc wire lying on the slot elastically, diverting at least one wing to a labial direction during the correcting treatment.
20. The method in accordance with the claim 19, comprehending the rotation steps of a tooth or moving a tooth in the lingual to labial direction or in the labial to lingual direction.
21. The method in accordance with the claim 19, in which the width of the labial leg, measured through the wings, is not greater than the length of the slot.
22. The method in accordance with the claim 19, in which the free width of the cut, measured in the longitudinal direction of the slot, is just a little bit greater than the extension length of the lock's labial leg.
23. One kit comprehending a support for orthodontics use, with a basis; a support disposed on the basis; an occlusal wall with at least one occlusal connection wing extending from the support; a gingival wall with at least one connection wing extending from the support; a slot separating the occlusal wall from the gingival wall and extending continuously in the mesial to distal direction; a passage that extends continuously through the support in the gingival to occlusal direction; as well as two different flexible lock that can be exchanged with one another and that have one labial and one lingual leg that are interconnected by a section in the occlusal or in the gingival side, where the lingual leg can be introduced into the passage and can be moved there only in the gingival-occlusal direction between a closed position in which the labial leg extends to a cut in the gingival or occlusal wall, that is provided with a stop to a stop for the labial leg, at least in the labial direction; and an opened position of the lock in which the labial leg end is placed above the occlusal or the gingival wall, respectively, and where the labial leg, at least, from a first lock with two different flexible locks, has one wing that extends in the distal direction and one wing that extends in the mesial direction the lingual leg is received in the passage and is disposed to the displacement in the passage only in the gingival to occlusal direction, between one closed and one opened position of the lock; with the particularity that in the closed position of the first lock a gingival or an occlusal extension of the labial leg, respectively, is in contact with the labial stop, or is almost in contact with, even when the slot is empty, while the second lock's labial leg from the two different flexible locks is spaced-out in a distance greater than the labial stop, in the closed position, than the extension of the first cut's labial leg that has two straight sections that extend according to an angle greater than 180 degrees in relation to the other.
24. The kit as defined in the claim 23, in which the leg of the second labial lock is in contact with a lingual stop, which stays between the labial stop and the passage, or stays almost in contact with this lingual stop in the closed position of the lock.
25. The kit as defined in the claim 24, in which the leg of the second slip is in contact with the lingual stop to a pre-tension.
26. The kit as defined in the claim 23, in which when the slot stays in another empty mode, the labial leg of the second lock stays spaced-out for no more than 0,5 mm from the lingual bottom of the slot.
27. The kit as defined in the claim 23, in which the labial leg of the second lock has two wings, that extend in the mesial direction and another that extends in the distal direction.
28. The kit as defined in the claim 23, in which the leg of the first lock has two wings that extend in the mesial direction and another in the distal direction and that are placed above the slot or in the labial region in the closed position of the first lock.
29. The kit as defined in the claim 28, in which the wings do not extend into the cut.
30. The kit as defined in the claim 23, in which the labial leg of the first lock stays spaced-out from the bottom of the slot, for at least 0,025 inches (corresponding to 0,64 mm) in the closed position of the lock and with the slot in the empty condition.

### Difficult points of the prior art

These brackets, of the prior art, have some functional drawbacks, such as:
- The opening tool fastening inside the slot or escaping due to the clip's configuration.
- Contain hooks that cause soft tissues injuries due to the geometry.
- Do not allow using the conventional bandages insurance.
- The brackets' basis from the market do not provide a security retention in the tooth, due to the configuration of its basis.
- They have auxiliary slots conformed by openings in their formation structures, whose drawback is the accumulation of food waste, which are not removed by oral hygiene performed by the own patient.

### Summary of the arrangement

By the need to obtain a more efficient, more comfortable bracket, which does not cause buccal mucosa injury, which has a more reliable fixation, among other functional disabilities improvements, led the inventor, with a notorious sectorial knowledge, to the creation and development of the object in this patent, entitles "ARRANGEMENT INTRODUCED IN BRACKET WITH CURVILINEAR RIDGES", which design a bracket that solves all the drawbacks, because it is designed specifically taking into account these presented problems.

Thus, this patent was designed aiming to obtain a bracket for fixed braces, with as few number of components as possible, conveniently configured and arranged to perform their functions with unmatched efficiency and versatility, without the drawbacks already mentioned.

### Brief description of the arrangement's drawings

The characterization of this utility model's patent application now proposed is done through the representative drawing of the "ARRANGEMENT INTRODUCED IN BRACKET WITH CURVILINEAR RIDGES", in such a way that the product can be completely reproduced by the appropriate technique, allowing full functional characterization of the claimed object.

From the elaborated figures that express the best or preferable way to make the product now idealized, is based the descriptive part of the report, through a detailed and consecutive numbering, where this clarifies aspects that can be implied by the endowed representation, in such a way to clearly determine the claimed protection.

Then, to better understanding and comprehension about how the "ARRANGEMENT INTRODUCED IN BRACKET WITH CURVILINEAR RIDGES", claimed here, was constituted, the illustrative drawings attached are presented, as you can see below:

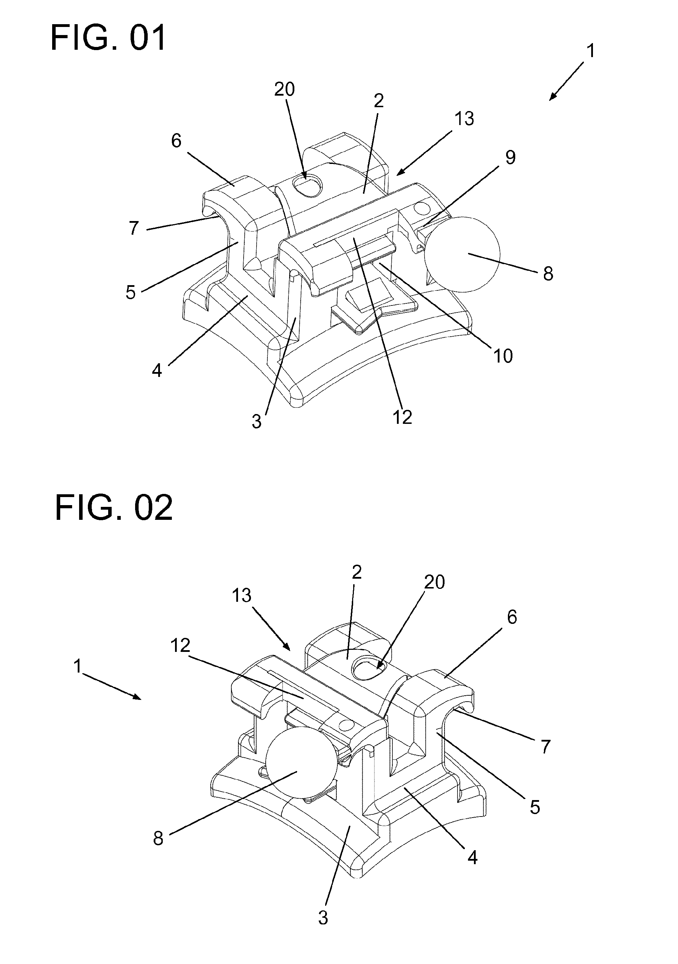

The FIG. 01 - Shows a left top-frontal view of the bracket with curvilinear ridges.
The FIG. 02 - Shows a right top-frontal view of the bracket with curvilinear ridges.

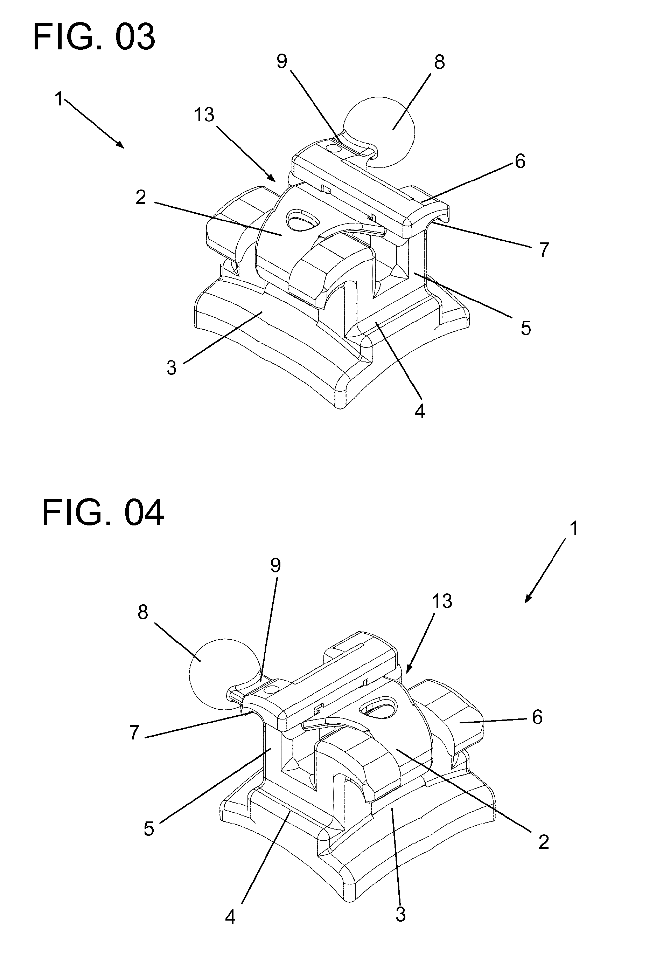

The FIG. 03 - Shows a right top-back view of the bracket with curvilinear ridges.
The FIG. 04 - Shows a left top-back view of the bracket with curvilinear ridges.

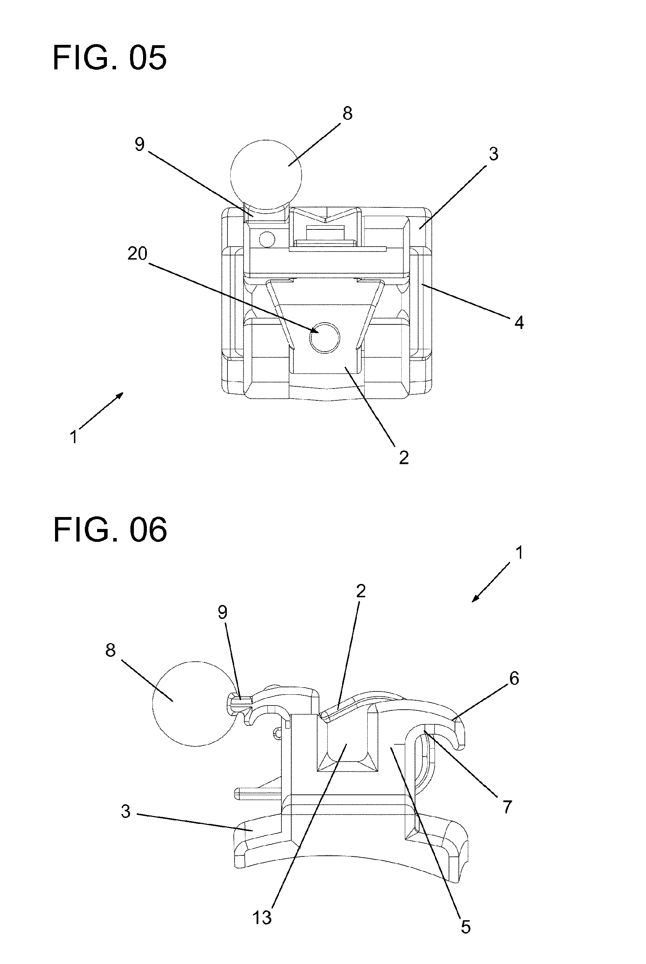

The FIG. 05 - Shows a top view of the bracket with curvilinear ridges.
The FIG. 06 - Shows a profile view of the bracket with curvilinear ridges.

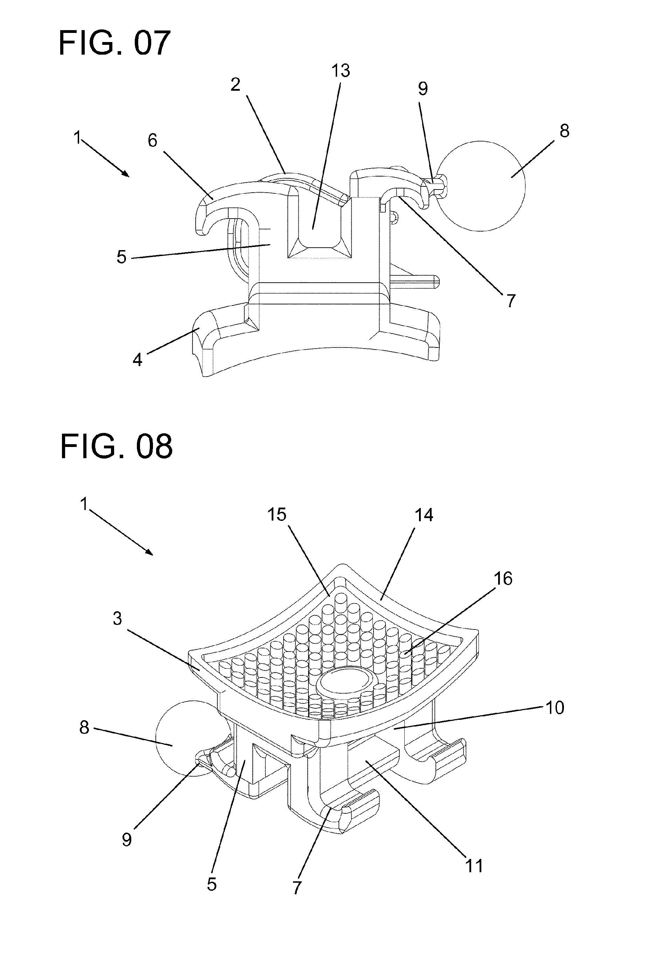

The FIG. 07 - Shows another profile view of the bracket with curvilinear ridges.
The FIG. 08 - Shows a bottom prospective view of the bracket with curvilinear ridges.

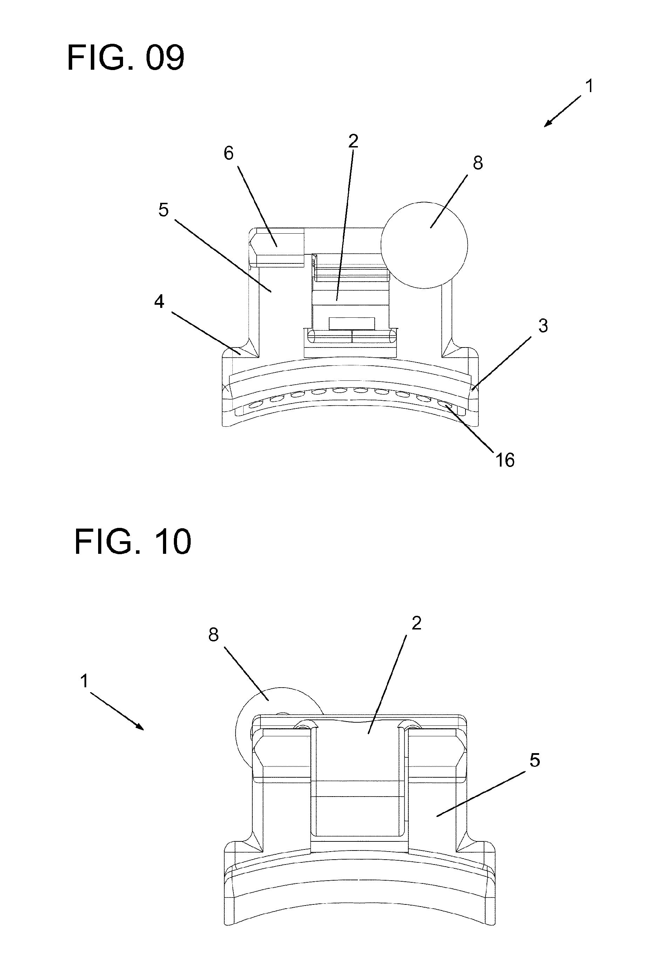

The FIG. 09 - Shows a frontal view of the bracket with curvilinear ridges.
The FIG. 10 - Shows a back view of the bracket with curvilinear ridges.

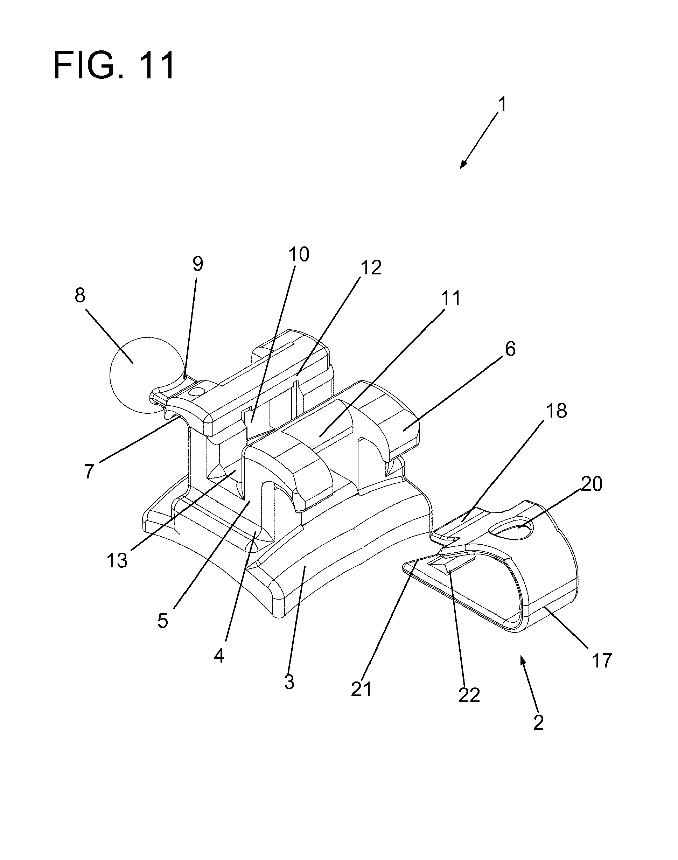

The FIG. 11 - Shows a top-back view of the bracket with curvilinear ridges with the detached clip.

These figures are merely illustrative and may present variations.

### Detailed arrangement of the incorporation

In accordance with how the figures listed above illustrate, the "ARRANGEMENT INTRODUCED IN BRACKET WITH CURVILINEAR RIDGES", conceives a bracket specifically designed to solve the problems that exist in other elements with the same functionality.

The object in this patent application, called bracket with curvilinear ridges (1), has the following innovations and benefits:
- Opening orifice of the displaced clip from the slot's projection; this configuration solve the problem of the other systems, in which the opening tool fastens inside the "slot", making it difficult to open the clip and creating inadvertent removal risk of the bracket; as such, the bracket presented dispenses the use of dedicated tools, which the other systems require to get around the problem of the hole that is over the slot.
- Has the clip's bottom end in the "V" shape, which minimizes the risk present in the other systems, from the tool to escape when it is necessary to open the clip activating it tangentially to the basis (latching of the clip by tartar cases). The invitation in "V" allows more firmness and accuracy, dispensing the furrow on the basis used by other systems, but which results in a bracket with a higher profile, therefore less comfortable to the patient and subject to detach.
- Has a spherical hook that minimizes vestibular soft tissue injuries, especially from gum, caused by other systems whose the hook's lower part is not rounded and this injuries start an inflammation process that causes gums hyperplasia, forcing the treatment interruption and the bracket removal.

- Claws or hooks with "dug" retention that allows the use of conventional bandages in the treatment stages when necessary, without the risk of escaping that the other systems have because they do not have dug claws.
- Basis with sand-blasted micro pin and retention edges that result in upper adhesive strength, appropriate to the self-connected system that is subject to masticatory and clip handing efforts and the retention edges minimize the chances that the adhesive excess flows up the basis, obstruct the clip's operation, as in other systems, and favor the marginal finishing of the collage, minimizing infiltration.
- Auxiliary slot absence, this configuration solves the failure from the other systems where this slot accumulates food waste almost impossible to be removed by the normal oral hygiene by the patient. The functions assigned to the auxiliary slot by the other systems, can be performed with more efficiency in other ways or with other accessories, what makes this auxiliary slot unnecessary. The auxiliary slot absence also allowed the design with reduced profile, which favors the patient's comfort and the resistance to the displacement, as it reduces the lever arm caused by the masticatory forces.
- Support absence, in other words, there is no "rest" for the clip's active end, which allows the interactivity level control and differentiation by the geometry change of the clips that allow the wires free slip with a large caliber, until clips that start the interaction in smaller wires, accelerating the exalted torques reading by the prior art, since in the traditional systems it is not possible to differentiate, due to the physical limit for the clip's action

More specifically, the bracket with curvilinear ridges (1) consists of two pieces, the clip (2) or lock, which encapsulates the traction wire, and the main structure, which is monoblock and has all corners rounded.

The main structure shows off a squared basis (3) topped by an upper-basis (4) that covers all the width and only a central third of the depth, being its height proportional to the width and depth.

Above the upper-basis (4) an "U" structure (5) is developed with a quadratic profile that has four hooks (6) in its upper vertexes, with concave upper portion and convex bottom portion (7), being one of these hooks (6) equipped, at the head and in material continuity, by a spherical hook (8) preceded by a connection segment (9) with a rectangular flat profile.

The vertical central portions of the structure in "U" (5) are emptied, in other words, endowed with a cave (10) and a squared opening, and straight interior sidewalls, being that between the hook's upper portions (6) there is one segment each, being one the segment in deck-over (11) and the other one is a rectangular segment (12), defined like this due to their sectional profiles.

The internal part of the structure in "U" (5) and defined as slot (13) has a groove shape with orthogonal walls.

The bottom face of the bracket (1) is concave and has the flange salient (14) with quadratic profile, so that the large flange (15) registered in this flange (14) is equipped with a column-row matrix with cylindrical protrusions (16) centered by an empty circle, to improve the adhesion to the dental enamel.

The clip is basically (2) a long rectangular segment conformed in a large curve (17) in its half portion that almost makes it touch its ends, being that the curvilinear portion's end extends abruptly in curve and closes orthogonally until a short and very narrow rectangular projection (18) and in this extended portion, there is in its beginning a circular through hole (20).

The clip's straight half portion (2) shows off in its end a cut in "V" (21) with shallow depth and preceded by a transversal triangular protrusion (22).

The clip (2) enters by its ends in the cave (10) of the "U" structure's portion (5) without the spherical hook (8).

This descriptive patent report dealt with an innovative orthodontic bracket that has, as evidenced by the analysis carried and the figures shown, umpteen differences about the orthodontic bracket models that exist in the market, besides the constructive and functional technical features totally different from these, relevant in the prior art.

By the benefits that offers and also because it covers itself with truly innovative features that fill all the novelty and originality requirements in the gender, this "ARRANGEMENT INTRODUCED IN BRACKET WITH CURVILINEAR RIDGES" gathers necessary and enough conditions to deserve the utility model privilege

## Claims

1. "ARRANGEMENT INTRODUCED IN BRACKET WITH CURVILINEAR RIDGES", is constituted by one bracket for fixed braces that, unlike the brackets that exist in the market, it has an unique geometry with specific functionalities, such as a clip that detaches close to the basis, rounded edges among other parameters; the bracket with curvilinear ridges (1) is composed of two pieces, the clip (2) or lock, which encapsulates the traction wire, and the main structure, which is monoblock and has all corners rounded; the main structure shows off a squared basis (3) topped by an upper-basis (4) that covers all the width and only a central third of the depth, being its height proportional to the width and depth; above the upper-basis (4) an "U" structure (5) is developed with a quadratic profile that has four hooks (6) in its upper vertexes, with concave upper portion and convex bottom portion (7), being one of these hooks (6) equipped, at the head and in material continuity, by a spherical hook (8) preceded by a connection segment (9) with a rectangular flat profile; the vertical central portions of the "U" structure (5) are emptied, in other words, endowed with a cave (10) and a squared opening, and straight interior sidewalls, being that between the hook's upper portion (6) there is one segment each, being one the segment in deck-over (11) and the other one is a rectangular segment (12), defined like this due to their sectional profiles; the internal part of the structure in "U" (5) and defined as slot (13) has a groove shape with orthogonal walls; the bottom face of the bracket (1) is concave and has the flange salient (14) with quadratic profile, so that the large flange (15) registered in this flange (14) is equipped with a column-row matrix with cylindrical protrusions (16) centered by an empty circle; the clip is basically (2) a long rectangular segment conformed in a large curve (17) in its half portion that almost makes it touch its ends, being that the curvilinear portion's end extends abruptly in curve and closes orthogonally until a short and very narrow rectangular projection (18) and in this extended portion, there is in its beginning a circular through hole (20); the clip's straight half portion (2) shows off in its end a cut in "V" (21) with shallow depth and preceded by a transversal triangular protrusion (22), the clip (2) enters by its ends in the cave (10) of the "U" structure's portion (5) without the spherical hook (8), **characterized by** the clip's (2) circular through hole (20) for being placed outside the slot's projection (13), in other words, is misaligned from the slot (13), besides the fact that the active end of the clip does not have a support or rest, having a quadrangular geometry with a considerably lower width than the rest of the structure, and also that the bottom portion of this clip (2) has the "V" shape (21); compared with the main structure: the spherical hook (8) has a spherical shape and the retention claws are dug, in other words, the hook (6) have the convex bottom portions (7) and, the perimeter of the basis' bottom face (3) is flanked by a salient flange (14) and the registered area in this flange (14) is equipped with sand-blasted micro pins, conformed by cylindrical protrusions (16), and finally this main structure that is monoblock does not have and auxiliary slot, in other words, it is soft, without openings or orifices.
